## Europäisches Patentamt
## European Patent Office
## Office européen des brevets

(11) Publication number: **0 114 711**
**B1**

(12) **EUROPEAN PATENT SPECIFICATION**

(45) Date of publication of patent specification: **02.12.87**

(51) Int. Cl.⁴: **B 65 G 53/42**, B 65 D 88/70

(21) Application number: **84200058.0**

(22) Date of filing: **18.01.84**

(54) **Method and apparatus for discharging granular material from a ship or the like.**

(30) Priority: **19.01.83 NL 8300201**

(43) Date of publication of application:
**01.08.84 Bulletin 84/31**

(45) Publication of the grant of the patent:
**02.12.87 Bulletin 87/49**

(84) Designated Contracting States:
**BE DE GB NL**

(56) References cited:
**DE-A-1 909 219**
**DE-B-1 295 470**
**GB-A- 559 777**
**NL-A-7 700 772**
**US-A-2 148 501**
**US-A-2 353 346**
**US-A-4 165 135**

(73) Proprietor: **G.E.M. Consultants B.V.**
**Parklaan 8**
**NL-3016 BB Rotterdam (NL)**

(72) Inventor: **Schellekens, Antonius Johannes Maria**
**Noordsingel 17**
**NL-3035 EG Rotterdam (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Courier Press, Leamington Spa, England.

## Description

This invention relates to a method of discharging granular or pulverulent material from a ship or the like by means of a suction tube via a discharge hopper formed around the inlet end of said suction tube in the material to be discharged, using blast nozzles spaced some distance from said inlet end, wherein several diverging streams of air coming from said blast nozzles are spaced around the end of the suction tube at uniform intervals along its entire circumference and are directed downwardly towards the axis of the suction tube to pass beyond the end thereof.

In a similar method, disclosed in GB—A—559,777, the supply of air at the inlet aperture of the suction tube is such as to cause a fluidization of the material to be transported. The result is that close to the inlet aperture the material is sucked away and a cavity is formed in the material around the inlet aperture, whereas the remaining material remains in position. A further disadvantage is the relatively large volume of air needed for fluidization.

It is an object of the present invention to eliminate these disadvantages.

For this purpose the method as defined in the opening paragraph hereof is characterized in that all said streams are directed downwardly towards the axis of the suction tube to pass beyond but adjacent the end thereof, so that the material underlying the streams forms a hopper-shaped skid surface over which the material slides before entering in the suction tube end.

The interspace between the blast nozzles and the direction of flow of the compressed air from them are selected pending on the material to be discharged, so that the formation of a closed "skid surface" is ensured.

The invention further relates to a suction apparatus for sucking up or discharging granular or pulverulent material from a ship or the like with a suction tube and with at least one tube for supplying compressed air being arranged around the end of said suction tube, said air supply tube having a plurality of blast nozzles directed downwardly towards the axis of the suction tube to pass beyond the end thereof, said air supply tube being arranged in spaced relationship around the end of the suction tube with the blast nozzles disposed at uniform intervals along its entire circumference, characterized in that all the blast nozzles disposed on the air supply tube are directed downwardly towards the axis of the suction tube to pass beyond but adjacent to the end thereof.

In one embodiment of the invention, a second air supply tube, or penetrating tube, which is provided at its bottom with outlet openings or second blast nozzles, is arranged vertically under the air supply tube. This arrangement ensures that the suction nozzles readily and properly penetrates into the material being transported. This latter is promoted still further by a preferred feature according to the invention, namely that the penetrating tube is provided at its lower end with teeth or the like.

It is observed that US—A—4,165,135 discloses a method and apparatus for discharging a granular material from a ship. In that arrangement, however, the blast nozzles are arranged so that fluidization occurs around the suction tube inlet.

One embodiment of the invention will now be described, by way of example, with reference to the accompanying drawings. In said drawings:

Fig. 1 diagrammatically shows a suction nozzle during operation: and

Fig. 2 shows a detail of the suction nozzle on a larger scale.

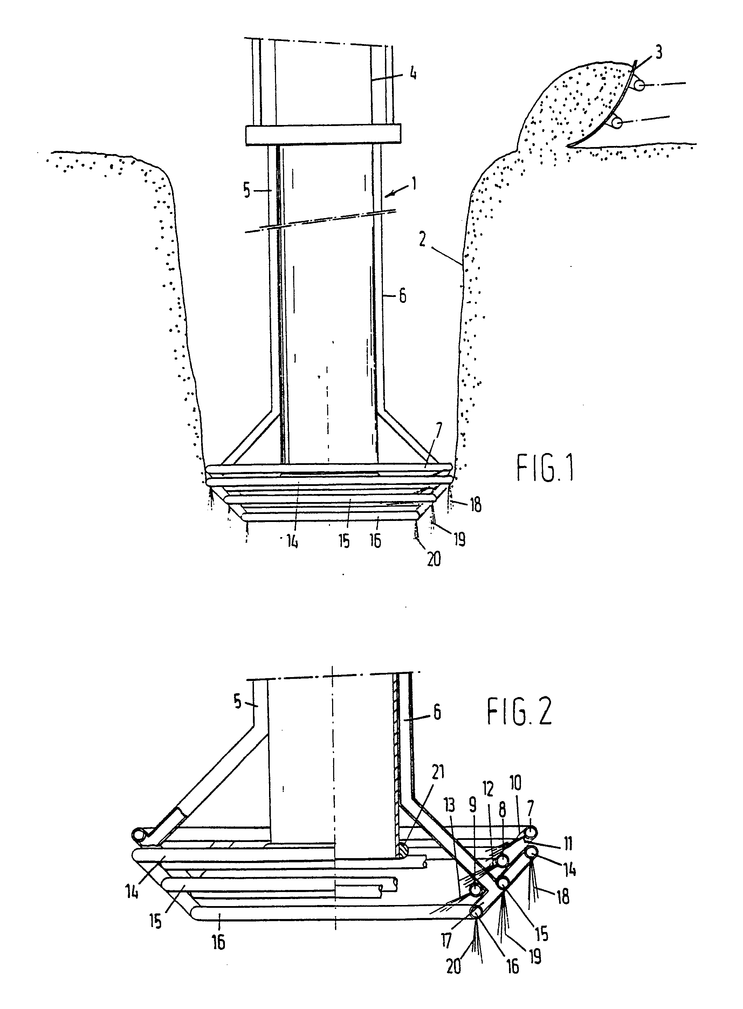

As shown in Fig. 1, a suction nozzle 1 is, during operation, in a well 2 of bulk material to be discharged. By means of a slide, of which only a pusher blade 3 is shown diagrammatically, material is repeatedly thrown into said well 2.

Nozzle 1 is provided with a suction tube 4, in which, in a conventional manner, a partial vacuum can be generated. Mounted along the suction tube are two air supply tubes 5 and 6. As shown particularly in Fig. 2, arranged at the inlet end of suction tube 4, in axially spaced relationship thereto, and radially spaced different distances apart, are three annular tubes 7, 8 and 9. These tubes are in open communication with each other by means of tube members 10 at uniform intervals along their circumference. The annular tubes 7, 8, 9 and the tube members 10 are in communication with air supply tube 5. As shown in Fig. 2, tubes 7, 8, 9 are provided throughout their entire circumference on the inside with passages for compressed air, owing to which streams of compressed air 11, 12 and 13 are formed, which are directed to the nozzle axis, and are shown diagrammatically in the drawing.

Similarly, under the annular tubes 7, 8, 9, annular tubes 14, 15, 16 are arranged, which at uniform intervals along their circumference are in open communication with each other by means of tube members 17. The annular tubes 14, 15, 16 and the tube members 17 are in communication with air supply tube 6.

Tubes 7, 8, 9, by means of which streams of compressed air 11, 12, 13 are created provide for the formation of a "hopper-shaped skid surface", over which the overlying material slides in the direction of the suction nozzle opening. As shown in Fig. 2, the suction nozzle opening is provided with a wear-resistant ring 21.

As shown in the drawings, tubes 14, 15 and 16 are provided along their entire circumference at the lower end with outlet openings through which streams of compressed air 18, 19 and 20 are formed. These streams of compressed air 18—20 serve for the introduction of the suction nozzle into the bulk material before the actual discharge can be started. For this reason these tubes are known by the name of penetrating tubes. They do not operate continuously.

Although the drawings only illustrate an embodiment of a suction nozzle for the discharge of bulk material from, for example, ships, it will be clear that the method described with reference to this embodiment can also be applied for the discharge of bulk material from a container, bin or the like, for which naturally the penetrating tubes may be dispensed with.

**Claims**

1. A method of discharging granular or pulverulent material from a ship or the like by means of a suction tube via a discharge hopper formed around the inlet end of said suction tube in the material to be discharged, using blast nozzles spaced some distance from said inlet end, wherein several diverging streams of air coming from said blast nozzles are spaced around the end of the suction tube at uniform intervals along its entire circumference and are directed downwardly towards the axis of the suction tube to pass beyond the end thereof, characterized in that all said streams are directed downwardly towards the axis of the suction tube to pass beyond but adjacent the end thereof, so that the material underlying the streams forms a hopper-shaped skid surface over which the material slides before entering in the suction tube end.

2. A suction apparatus for sucking up or discharging granular or pulverulent material from a ship or the like with a suction tube (1, 4) and with at least one tube (7, 8, 9) for supplying compressed air being arranged around the end of said suction tube, said air supply tube having a plurality of blast nozzles directed downwardly towards the axis of the suction tube to pass beyond the end thereof, said air supply tube being arranged in spaced relationship around the end of the suction tube with the blast nozzles disposed at uniform intervals along its entire circumference, characterized in that all the blast nozzles disposed on the air supply tube are directed downwardly towards the axis of the suction tube to pass beyond but adjacent to the end thereof.

3. A suction apparatus as claimed in claim 2, characterized in that a second air supply tube, or penetrating tube (14, 15, 16), which is provided at its bottom with outlet openings or second blast nozzles, is arranged vertically under the air supply tube (7, 8, 9).

4. A suction apparatus as claimed in claim 3, characterized in that the penetrating tube (14, 15, 16) is provided at its lower end with teeth or the like.

**Patentansprüche**

1. Verfahren zum Aufnehmen von körnigem oder staubförmigem Gut aus einem Schiff od.dgl. mittels eines Saugrohres durch einen um das in das aufzunehmende Gut einzuführende Ende des genannten Saugrohres angeordneten Aufnahmetrichter, wobei mit Zwischenraum zum genannten Einführungsende angeordnete Blasdüsen verwendet werden, und wobei mehrere divergierende, von den genannten Blasdüsen kommende Luftströme über den vollen Umfang des Saugrohrendes mit gleichmässigen Zwischenräumen um dieses Ende herum vorgesehen und abwärts gegen die Saugrohrachse gerichtet sind, um bis an dem Saugrohrende vorbei geführt zu werden, dadurch gekennzeichnet, dass alle genannten Ströme abwärts gegen die Saugrohrachse gerichtet sind, um bis an dem Saugrohrende vorbei, jedoch diesem Ende benachbart geführt zu werden, so dass das unter den Strömen liegende Gut eine trichterförmige Gleitfläche bildet, über welche das Gut vor Eintritt in das Saugrohrende gleitet.

2. Saugvorrichtung zum Aufsaugen oder Aufnehmen von körnigem oder staubförmigem Gut aus einem Schiff od.dgl., welche Vorrichtung ein Saugrohr (1, 4) und mindestens ein Rohr (7, 8, 9) zum Zuführen von Druckluft um das Ende des genannten Saugrohres aufweist wobei das Luftzuführungsrohr mehrere abwärts gegen die Saugrohrachse gerichtete Blasdüsen aufweist, um die Luftströme bis an dem Saugrohrende vorbei zu führen, welches Luftzuführungsrohr mit Zwischenraum um das Saugrohrende angeordnet ist, wobei die Blasdüsen mit gleichmässigen Zwischenräumen über den vollen Umfang des Saugrohrendes angeordnet sind, dadurch gekennzeichnet, dass alle an dem Luftzuführungsrohr angeordneten Blasdüsen abwärts gegen die Saugrohrachse gerichtet sind, um die Luftströme bis an dem Saugrohrende vorbei, jedoch diesem Ende benachbart zu führen.

3. Saugvorrichtung nach Anspruch 2, dadurch gekennzeichnet, dass ein zweites Luftzuführungsrohr oder Eindringrohr (14, 15, 16) das am Boden mit Auslassöffnungen oder zweite Blasdüsen versehen ist, vertikal unter dem Luftzuführungsrohr (7, 8, 9) angeordnet ist.

4. Saugvorrichtung nach Anspruch 3, dadurch gekennzeichnet, dass das Eindringrohr (14, 15, 16) an seinem unteren Ende mit Zähnen od.dgl. versehen ist.

**Revendications**

1. Une méthode de décharger du matériau granulaire ou pulvérulent d'un vaisseau ou pareil à l'aide d'un tube d'aspiration via une trémie de décharge formée autour de l'extrémité d'entrée dudit tube d'aspiration dans le matériau à décharger, en utilisant des tuyères à quelque distance de ladite extrémité d'entrée, plusieurs filets d'air divergents venant desdites tuyères étant espacés autour de l'extrémité du tube d'aspiration à intervalles uniformes le long de son entière circonférence et étant orientés vers le bas vers l'axe du tube d'aspiration pour passer au delà de son extrémité, caractérisée en ce que tous lesdits filets sont orientés vers le bas vers l'axe du tube d'aspiration pour passer au delà, mais adjacent de son extrémité, de sorte que le matériau sousjacent des filets forme une surface de glissement en forme de trémie sur laquelle le matériau glisse avant d'entrer dans l'extrémité du tube d'aspiration.

2. Un appareil d'aspiration pour aspirer ou décharger du matériau granulaire ou pulvérulent d'un vaisseau ou pareil avec un tube d'aspiration (1, 4) et avec au moins un tube (7, 8, 9) pour amener de l'air comprimé étant prévu autour de l'extrémité dudit tube d'aspiration, ledit tube d'amenée d'air ayant une pluralité de tuyères orientées vers le bas vers l'axe du tube d'aspiration pour passer au delà de son extrémité, ledit tube d'amenée d'air étant espacé autour de l'extrémité du tube d'aspiration et les tuyères étant prévus à intervalles uniformes le long de son entière circonfé-rence, caractérisé en ce que toutes les tuyères prévues sur le tube d'amenée d'air sont orientées vers le bas vers l'axe du tube d'aspiration pour passer au delà mais adjacent de son extrémité.

3. Un appareil d'aspiration selon la revendication 2, caractérisé en ce qu'un deuxième tube d'amenée d'air, ou tube de pénétration (14, 15, 16) dont le fond a des orifices de sortie ou deuxièmes tuyères, est prévu verticalement au-dessous du tube d'amenée d'air (7, 8, 9).

4. Un appareil d'aspiration selon la revendication 3, caractérisé en ce que le tube de pénétration (14, 15, 16) est muni à son extrémité inférieure de dents ou pareilles.

FIG.1

FIG.2